# DEMANDE DE BREVET EUROPEEN

(11) **EP 0 810 042 A1**
(43) Date de publication de la demande: **03.12.1997**
(21) Numéro de dépôt: 97401193.4
(22) Date de dépôt: 30.05.1997
(51) Int. Cl.: B09B 5/00, B25F 1/00, B66F 15/00

(54) **Outil pour désolidariser un élément de la caisse d'un véhicule**

(30) Priorité: 31.05.1996 FR 9606759
(71) Demandeur: Renault, 92109 Boulogne Billancourt (FR)
(72) Inventeur: Amorin, José, 92365 Meudon La Forêt (FR); Joly, Cyril, 94400 Vitry-Sur-Seine (FR); Cherfan, Samir, 78150 Le Chesnay (FR)

(57) **Abrégé**

Outil pour désolidariser un élément de la caisse d'un véhicule, caractérisé en ce qu'il comprend un manche (11) dont l'une des extrémités porte un élément conformé en fourche (2) muni de moyens de sectionnement (23).

## Description

La présente invention a pour objet un outil pour désolidariser un élément, tel qu'un bouclier de pare-chocs, de la caisse d'un véhicule automobile.

Des contraintes réglementaires, édictées dans un souci de la protection de l'environnement, imposent aux constructeurs automobiles de recycler une part importante de leurs véhicules.

Le processus de recyclage, qui passe par un tri des matériaux constitutifs des divers organes du véhicule, en fonction de leur nature et du processus de retraitement à leur appliquer (métaux ferreux, métaux non-ferreux, parties vitrées, tissus, etc.), nécessite dans un premier temps un démontage du véhicule en plusieurs sous-ensembles, qui correspondent généralement aux principaux organes fonctionnels du véhicule (sièges, tableau de bord, vitres, portes, bouclier de pare-chocs, etc.).

Ce processus de recyclage d'un véhicule obéit à des contraintes économiques qui imposent de minimiser son coût ; les frais engendrés par la main d'oeuvre directe que nécessite, en amont du processus, le démontage du véhicule en différents organes fonctionnels constituent une composante importante du coût total du recyclage d'un véhicule ; il est souhaitable de limiter autant que possible la durée d'intervention des opérateurs.

Généralement, lorsqu'un élément extérieur, tel qu'un bouclier de pare-chocs, est relié à la caisse par un assemblage démontable, par exemple un assemblage vissé, la séparation du bouclier de la caisse, s'obtient à l'aide d'un outil adhoc, par exemple un tournevis pour un assemblage vissé ou une clé pour le desserrage d'un assemblage boulonné.

Malheureusement, des contraintes de design font que le bouclier doit être positionné au plus près de la caisse dans le prolongement de cette dernière, d'où une accessibilité difficile aux liaisons.

De plus, ces assemblages démontables sont exposés aux agressions, notamment d'origine atmosphérique et sont fréquemment rouillés lorsque le véhicule est retiré de la circulation.

D'autre part, le bouclier peut être soudé ou collé sur la caisse, et plus généralement, par des assemblages non démontables.

Enfin, le bouclier peut aussi être relié à la caisse par des liaisons souples dont l'arrachage se révèle difficile.

Le travail de l'opérateur chargé de la séparation du bouclier de la caisse s'avère en conséquence souvent long et malaisé.

Il est donc souhaitable, pour permettre aux opérateurs de travailler avec efficience et réduire de manière significative le coût total du recyclage de fournir aux opérateurs un outil apte à désolidariser rapidement un élément extérieur de la caisse.

L'outil selon l'invention est caractérisé en ce qu'il comprend un manche dont l'une des extrémités porte un élément conformé en fourche muni de moyens de sectionnement.

Selon une autre caractéristique de la présente invention, l'élément conformé en fourche est relié au manche par une douille.

Selon une autre caractéristique de la présente invention, l'élément conformé en fourche comporte deux dents parallèles qui sont reliées à la douille par l'intermédiaire d'un corps central, les dents s'étendant parallèlement à l'axe longitudinal du manche.

Selon une autre caractéristique de la présente invention, la partie du corps central qui s'étend entre les dents comporte une arête tranchante.

Selon une autre caractéristique de la présente invention, l'arête est biseautée.

Selon une autre caractéristique de la présente invention, l'extrémité libre du manche est effilée.

Selon une autre caractéristique de la présente invention, la douille porte un élément de préhension.

Selon une autre caractéristique de la présente invention, l'élément de préhension est constitué par une poignée.

Selon une autre caractéristique de la présente invention, la poignée fait saillie vers l'extérieur de la douille sensiblement perpendiculairement à l'axe longitudinal de cette dernière.

Un avantage de la présente invention réside dans le fait que l'outil est simple à utiliser et peut être utilisé pour tout type de véhicule, par des opérateurs peu formés.

L'outil est en outre d'une conception simple et robuste, ce qui est essentiel pour une utilisation intensive et prolongée par des professionnels de la démolition automobile.

On comprendra mieux les buts, aspects et caractéristiques de la présente invention, d'après la description donnée ci-après d'un mode de réalisation de l'invention, présenté à titre d'exemple non limitatif, en se référant aux dessins annexés, dans lesquels :
- la figure 1 est une vue de face de l'outil à main selon l'invention,
- la figure 2 est une vue de côté de l'outil de la figure 1,
- les figures 3 et 4 représentent des modes d'utilisation de l'outil pour désolidariser un bouclier de pare-chocs de la caisse d'un véhicule.

Les éléments communs aux différentes figures portent les mêmes références.

Tel qu'il est représenté sur les dessins, l'outil à main selon l'invention comprend trois parties désignées chacune d'une façon générale par les références 1, 2 et 3.

Ces différentes parties sont préférentiellement réalisées en un acier d'une dureté comprise entre 350 et 600 HB.

Toutefois, tout autre matériau permettant à l'outil de remplir les fonctions qui vont être exposées dans la suite de la description est envisageable.

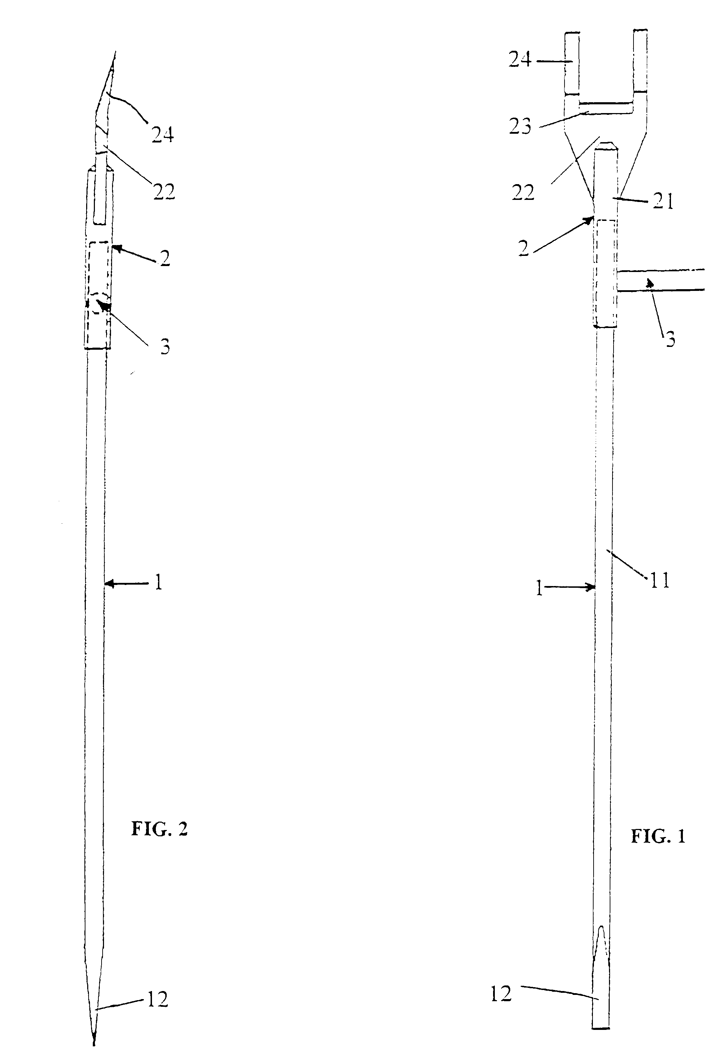

Une première partie 1 est constituée par un manche 11 dont l'extrémité libre 12 s'effile comme représenté sur les figures 1 et 2. A titre d'exemple non limitatif, cette extrémité libre 12 peut être biseautée ou bien être conformée en spatule. Le manche 11 présente préférentiellement une section cylindrique afin de faciliter sa prise en main par un opérateur.

Le manche 11 est solidarisé par son extrémité à une seconde partie 2 conformée en fourche 2.

Cette seconde partie 2 comprend un corps central 22 muni de deux dents parallèles 24 s'étendant, préférentiellement, dans une direction parallèle à l'axe longitudinal du manche 11. Les dents 24 se raccordent au corps 22 par leur extrémité postérieure.

Selon le mode de réalisation représenté aux figures 1 et 2, le corps 22 comprend une première partie sensiblement parallélépipédique qui se prolonge par une deuxième partie sensiblement trapéziforme.

De préférence, l'extrémité avant des dents 24 est biseautée.

La partie postérieure du corps 22 se prolonge par une douille 21 qui s'étend dans une direction parallèle à l'axe longitudinal des dents 24.

L'extrémité de la douille 21 opposée au corps 22 comporte un trou borgne dans lequel est emmanchée l'une des extrémités, de forme complémentaire, du manche 11.

Le corps 22 présente, entre les deux dents 24, une arête tranchante 23, par exemple biseautée.

La seconde partie 2 de l'outil peut être, soit d'une seule pièce, soit constituée d'un assemblage par soudure de ses différents éléments constitutifs.

La troisième partie de l'outil est constituée par une poignée 3 fixée soit sur le manche 11, au niveau de la jonction de ce dernier avec la douille 21, soit directement sur la douille 21. Selon le mode de réalisation de l'invention représenté, la poignée 3 fait saillie vers l'extérieur de la douille 21 perpendiculairement à cette dernière.

Selon ce mode de réalisation préférentiel, la poignée 3 est soudée sur la douille 21.

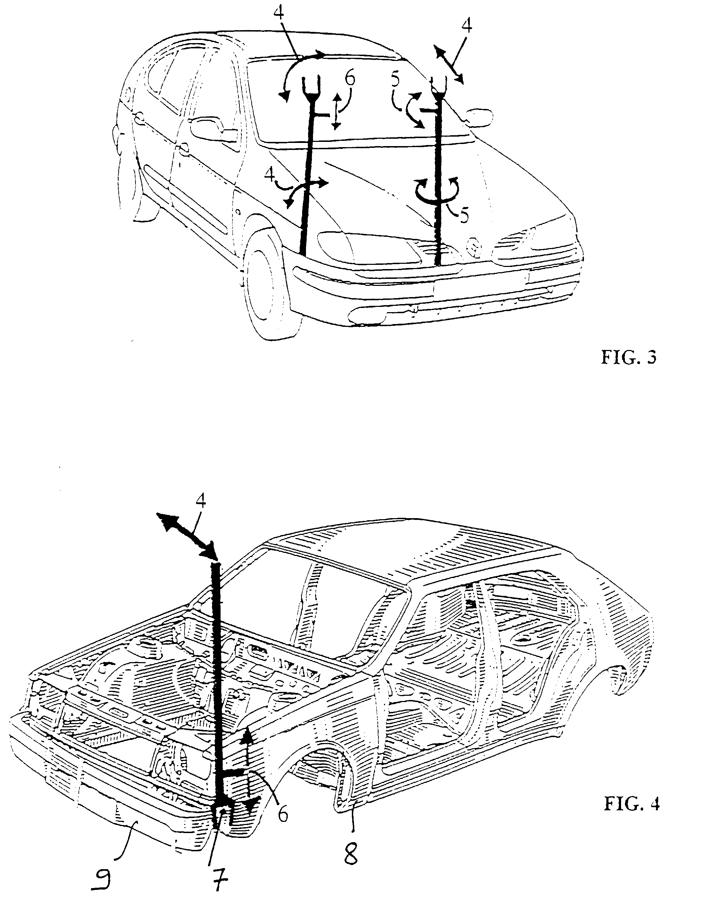

Une utilisation possible de l'outil va maintenant être exposée en référence aux figures 3 et 4.

L'outil va être utilisé pour séparer un bouclier 9 de pare-chocs de la caisse 8 d'un véhicule automobile hors d'usage.

L'opérateur qui désire désolidariser le bouclier 9 de pare-chocs de la caisse 8 procède de la sorte :
- il engage l'extrémité effilée 12 du manche 11 dans l'interstice compris entre la caisse 8 et le bouclier 9,
- il agrandit localement cet interstice, notamment au niveau des points de fixation du bouclier 9 sur la caisse 8, opération qui peut être réalisée en faisant tourner (5) l'outil autour de son axe de symétrie longitudinal, en s'aidant de la poignée 3, comme représenté à la figure 3,
- pour arracher une liaison, l'opérateur positionne l'extrémité effilée 12 de l'outil à proximité de cette liaison, puis exerce sur le bouclier un couple suffisant pour arracher la liaison ; ce couple sera d'autant plus important que la longueur du manche 11, et donc le bras de levier, sera important. La destruction des liaisons pouvant ainsi être réalisée avec un effort très faible, il en résulte naturellement une facilité extrême pour désolidariser le bouclier 9 de la caisse 8.

Quant aux éventuelles liaisons souples qui relient le bouclier 9 à la caisse 8, leur souplesse même rendant difficile leur rupture par arrachement, il est préférable de les sectionner ; pour ce faire, ainsi que représenté à la figure 4, l'opérateur introduit l'outil entre la caisse 8 et le bouclier 9, et positionne ledit outil de telle sorte que les dents 24 soient disposées de part et d'autre de la liaison à sectionner, et que l'arête 3 vienne au contact de la liaison 7.

L'opérateur applique alors un effort tranchant sur la liaison jusqu'à son sectionnement en appuyant sur la poignée 3, par exemple à l'aide de son pied.

Une autre manière de procéder consiste à imprimer à l'outil un mouvement alternatif (6) selon une direction sensiblement verticale comme représenté à la figure 4 jusqu'à rupture de la liaison 7. Cette action tranchante de l'outil peut être combinée avec l'exercice d'un couple sur le bouclier 9, tel que précédemment décrit.

L'opérateur réitère ces opérations pour chaque liaison 7 jusqu'à désolidariser complètement le bouclier 9 de la caisse 8.

Il va de soi que la présente invention ne doit pas être limitée au mode de réalisation décrit et représenté, mais en couvre, au contraire toutes les variantes.

## Revendications

1. Outil pour désolidariser un élément de la caisse d'un véhicule, caractérisé en ce qu'il comprend un manche (11) dont l'une des extrémités porte un élément conformé en fourche (2) muni de moyens de sectionnement (23).

2. Outil selon la revendication 1, caractérisé en ce que l'élément conformé en fourche (2) est relié au manche (11) par une douille (21).

3. Outil selon la revendication 2, caractérisé en ce que l'élément conformé en fourche (2) comporte deux dents (24) parallèles qui sont reliées à la douille (21) par l'intermédiaire d'un corps central (22), et en ce que les dents (24) s'étendent parallèlement à l'axe longitudinal du manche (11).

4. Outil selon la revendication 3, caractérisé en ce que la partie du corps central (22) qui s'étend entre les dents (24) comporte une arête tranchante (23).

5. Outil selon la revendication 4, caractérisé en ce que l'arête (23) est biseautée.

6. Outil selon l'une quelconque des revendications précédentes, caractérisé en ce que l'extrémité libre (12) du manche (11) est effilée.

7. Outil selon l'une quelconque des revendications précédentes, caractérisé en ce que la douille 21 porte un élément de préhension (3).

8. Outil selon la revendication 7, caractérisé en ce que l'élément de préhension (3) est constitué par une poignée.

9. Outil selon la revendication 8, caractérisé en ce que la poignée fait saillie vers l'extérieur de la douille (21) sensiblement perpendiculairement à l'axe longitudinal de cette dernière.
